# EUROPÄISCHE PATENTANMELDUNG

(11) **EP 1 964 902 A1**
(43) Veröffentlichungstag der Anmeldung: **03.09.2008**
(21) Anmeldenummer: 08151401.0
(22) Anmeldetag: 14.02.2008
(51) Int. Cl.: C09J 7/02, B32B 27/08, B32B 27/32

(54) **Oberflächenschutzfolie mit niedriger Abrollkraft**

(30) Priorität: 27.02.2007 DE 102007009753; 11.05.2007 DE 102007022727
(71) Anmelder: tesa AG, 20253 Hamburg (DE)
(72) Erfinder: Behrens, Nicole, 20257, Hamburg (DE); Böhm, Nicolai, 20357, Hamburg (DE)

(57) **Zusammenfassung**

Die Erfindung betrifft eine selbstklebende Schutzfolie, bestehend aus einem Träger, auf den einseitig eine Klebemasse aufgebracht ist, dadurch gekennzeichnet, dass der Träger zumindest zwei Schichten aufweist, eine erste, der Klebemasse zugewandte Schicht aus einer ungereckten Folie, die mindestens ein Propylen-Blockcopolymer mit einem Gehalt von 10 bis 95 % (w/w) enthält, und eine zweite, der Klebemasse abgewandte Schicht aus einer Folie, die mindestens 75 % (w/w), bevorzugt mindestens 80 % (w/w) eines Polyethylens niedriger Dichte enthält.

## Beschreibung

Die Erfindung betrifft eine witterungsstabile selbstklebende Schutzfolie mit hoher Haftung zum Schutz von Oberflächen wie Glas, Keramik, VA-Stahl, Polycarbonat- oder Acrylglas, insbesondere von lackierten Oberflächen bei gleichzeitiger niedriger Abrollkraft der Schutzfolie in Rollenform. Insbesondere sind die erfindungsgemäßen Schutzfolien zum Schutz des frischen Abschlusslacks von Fahrzeugen wie Automobilen und zum Schutz von frisch lackierten Fahrzeugteilen gegen Verschmutzungen und Beschädigungen während der Montage, des Transports und der Lagerung geeignet.

In der EP 0 592 913 A1 ist eine Oberflächenschutzfolie für den Transport von Automobilen beschrieben, die aus einem Copolymerisat aus EVAc mit einem Gehalt von 33 % Vinylacetat besteht. Das Aufbringen einer zusätzlichen Klebeschicht erfolgt bei dieser Schutzfolie nicht. Eine derartige Folie weist einen einfachen Aufbau auf, zeigt aber in ihrer Verwendung deutliche Nachteile. Die Klebkraft ist wegen des hohen kristallinen Anteils sehr gering, dieser Mangel soll durch Erwärmen bei der Applikation beseitigt werden. Auch neigt diese Folie, wenn sie nicht mit einer trennenden Eindeckung (zum Beispiel Silikonpapier) versehen sind, zum Verblocken bei Lagerung. Dies lehrt unter anderem die EP 0 768 356 A1.
Die beschriebene Folie zeigt starke Lackdeformation und sehr schweres Abziehen nach Gebrauch. Letzteres ist darauf zurückzuführen, dass das in den Beispielen beschriebene EVAc mit 33 % (w/w) Vinylacetat Siegeleigenschaften aufweist (es wird üblicherweise für Siegelanwendungen eingesetzt). Ab 40 % (w/w) Vinylacetat ist der kristalline Anteil so gering, dass dieser Mangel nicht auftritt.

Die in der DE 195 32 220 A1 dargelegte Klebefolie mit EVAc-Kleber ist den beschriebenen Produkten in der Haftung deutlich überlegen. Eine Beeinflussung der zu schützenden Lacke tritt mit Ausnahme von Einkomponenten-PU-Systemen nicht auf. Diese Klebefolie weist aber beim Abziehen nach Gebrauch eine hohe Verklebungsfestigkeit auf, wodurch die Klebefolie nicht ohne Abrisse abgezogen werden kann. Diese Erhöhung der Verklebungsfestigkeit bei Lagerung des Klebeverbundes, vom Fachmann Aufziehen genannt, ist durch Wechselwirkungen des Klebers, insbesondere polare Kräfte, mit dem Lack bedingt. Auf der anderen Seite ergeben polare Comonomere wie Acrylat oder Vinylacetat die gewünschte hohe Anfangshaftung.

Die EP 1 190 008 A1 beschreibt eine Klebefolie, die eine hinreichend hohe Anfangsverklebungsfestigkeit besitzt, damit beim Verkleben unter Spannung (Applizieren der Klebefolie an gewölbte Flächen) keine Ablösung auftritt, und die nach längerer Lagerung (bis zu einem Jahr unter Bewitterung) trotzdem wieder leicht abziehbar ist. Gleichzeitig tritt kein Schrumpf auf und die Schutzfolie ist ohne Abrisse und ohne Siegeln ablösbar. Auch ist keine trennende Eindeckung zur Lagerung notwendig, allerdings kann es bei Einsatz von EVM-Klebemassen mit hoher Klebkraft und gleichzeitiger Lagerung über mehrere Monate zum Auftreten hoher Abrollkräfte kommen.
Gleichzeitig wird in der EP 1 190 008 A1 ausgeführt, dass ein Einsatz einer PolyethylenFolie als Trägermaterial in der Oberflächenschutzfolie aufgrund der mangelhaften Temperaturbeständigkeit ebenfalls nicht möglich ist.

Den Einsatz einer Polyethylen-Trennfolie für Acrylat- und Kautschuk-Klebemassen beschreibt die GB 676,559 A. Der Einsatz einer Trennfolie ist aber aus ökonomischen Gründen für eine Folie, die großflächig angewandt wird, nicht erwünscht.

Weiterhin weisen EVM-Klebemassen Eigenschaften bezüglich Klebkraft und Änderung der Verklebungsfestigkeit bei Lagerung auf, die sich von Acrylat- und Kautschuk-Klebemassen unterscheiden. So ist die Verwendung von Polyethylenen mit Dichten von nicht mehr als 0,90 g/cm³ als Trennfolie für Acrylate in EP 0 742 814 A1 beschrieben. Für EVM-Klebemassen sind solche Trennfolien nicht geeignet.

Die Aufgabe der Erfindung ist es daher, eine selbstklebende Schutzfolie zur Verfügung zu stellen, die nach längerer Lagerung in Rollenform (bis zu zwei Jahren) noch leicht abrollbar ist und die bei der Applikation eine hinreichend hohe Anfangsklebrigkeit besitzt, damit beim Verkleben unter Spannung (Applizieren der Klebefolie an gewölbte Flächen) keine Ablösung auftritt. Gleichzeitig soll kein Schrumpf auftreten und die Schutzfolie ohne Abrisse ablösbar sein. Auch soll keine trennende Eindeckung zur Lagerung notwendig sein.

Gelöst wird diese Aufgabe durch eine selbstklebende Schutzfolie, wie sie im Hauptanspruch niedergelegt ist. Gegenstand der Unteransprüche sind dabei vorteilhafte Weiterbildungen der Schutzfolie und Verwendungen derselben. Des Weiteren betrifft die Erfindung Verfahren zum Herstellen derselben.

Demgemäß betrifft der erfindungsgemäße Gegenstand eine selbstklebende Schutzfolie, bestehend aus einem Träger, auf den einseitig eine Klebemasse aufgebracht ist, wobei der Träger zumindest zwei Schichten aufweist, eine erste, der Klebemasse zugewandte Schicht aus einer ungereckten Folie, die mindestens ein Propylen-Blockcopolymer mit einem Gehalt von 10 bis 95 % (w/w) enthält, und eine zweite, der Klebemasse abgewandte Schicht aus einer Folie, die mindestens 75 % (w/w), bevorzugt mindestens 80 % (w/w) eines Polyethylens niedriger Dichte (PE-LD) enthält.
Die erste, der Klebemasse zugewandte Schicht ist aus der EP 1 190 008 A1 bekannt.

In einer ersten vorteilhaften Ausführungsform der Erfindung besitzt das Polyethylen niedriger Dichte (PE-LD) eine Dichte zwischen 0,915 g/cm³ und 0,935 g/cm³, bevorzugt zwischen 0,915 g/cm³ und 0,930 g/cm³ und/oder einen Schmelzpunkt zwischen 102 °C und 120 °C.
Weiter vorzugsweise hat die zweite Schicht eine Dicke von höchstens 15 µm, bevorzugt höchstens 10 µm.
Des Weiteren ist das PE-LD verzweigt.
Die zweite, der Klebemasse abgewandte Schicht aus Polyethylen niedriger Dichte bildet vorzugsweise die Außenschicht des Trägers. Diese Außenschicht bildet diejenige Seite der Trägers, die nicht mit Haftvermittler oder einer Klebemasse versehen wird.

Die verwendeten Polypropylenblockcopolymere (auch Impact Resistant Polypropylen genannt) sind in der Literatur in Encycl. Polym. Sci. Technol. 13, 479ff (1988) und in Ullmann's Encyclopedia of Industrial Chemistry A21, 529ff (1992) beschrieben. Beispiele für Handelsnamen sind Propathene GSF 113 (ICI), 411 GA 05 (Amoco), PMA 6100 (Montell), Stamylan P (DSM), BD 801 F (Borealis), Daplen FFC1012 (PC), Novolen 2309 L.
Derartige Blockcopolymere unterscheiden sich untereinander im Wesentlichen im Schmelzindex (= MFI = MFR) und im Gehalt an Comonomer. Der Schmelzindex beeinflusst die Festigkeit der Folie und die Fließfähigkeit der Schmelze in gegenläufiger Weise. Für die Herstellung der ersten Folie ist ein Schmelzindex von 0,8 bis 15 g/10 min (ISO 1133 (A/4) bei 230 °C und 2,16 kg) günstig, um die Erfordernisse nach Zähigkeit und Reißfestigkeit einerseits und Verarbeitbarkeit (Produktionsgeschwindigkeit und Gleichmäßigkeit der Dicke bei coextrudierten Folien) andererseits zu erreichen. Der bevorzugte Bereich liegt zwischen 4 und 10 g/10 min.
In dem Fall, dass Träger und Kleber durch Coextrusion miteinander verbunden werden, ist die Auswahl des Schmelzindex des Polypropylenblockcopolymers wie auch der weiteren thermoplastischen Bestandteile der Folienrezeptur wichtig.

Der Gehalt an Comonomer in den Polypropylenblockcopolymeren bestimmt die Weichheit, Schlagzugzähigkeit und die Wärmebeständigkeit der daraus hergestellten Schutzfolie. Vorzugsweise enthält die erste Folie ein Polypropylenblockcopolymer mit 3 bis 15 % (w/w) Ethylen als Comonomer. Die Schlagzugzähigkeit nach DIN 53448 sollte vorteilhafterweise längs und quer mindestens 1000 mJ/mm² betragen.

Als weitere Bestandteile können zum Beispiel Polyethylen (wie zum Beispiel HDPE, LDPE, MDPE, LLDPE, VLLDPE), Copolymere des Ethylens oder Propylens mit polaren Comonomeren, Polypropylen-Homopolymere oder Polypropylen-Random-Copolymere zur Feinabstimmung der Eigenschaften (mechanische, thermische oder andere Eigenschaften wie Glanz, Haftung des Klebers, Extrusionsverhalten usw.) mitverwendet werden. Besonders vorteilhaft ist die Kombination von mehreren Polypropylenen, insbesondere unterschiedlicher Weichheit und unterschiedlicher Schmelzindices wie zum Beispiel weichem Blockcopolymer mit PP-Homopolymer oder einer harten Blockcopolymertype, da Zähigkeit, Wärmebeständigkeit und Fließverhalten besser an die Notwendigkeiten angepasst werden können als bei alleiniger Verwendung eines Blockcopolymers.

Für eine hinreichende Wärmebeständigkeit sollte der Anteil an Propylen in der ersten Schicht mindestens 65 % (w/w) betragen.

Bei mehrlagigem Aufbau des Trägers, also wenn zwischen der ersten und der zweiten Schicht und/oder zwischen erster Schicht und der Klebemasse weitere Schichten vorhanden sind, ist die erste Schicht diejenige Schicht, die für die Festigkeit verantwortlich ist und daher den höchsten Polypropylenanteil enthalten sollte (in der Regel auch die höchste Dicke aufweisen sollte).

In einer weiteren vorteilhaften Ausführungsform der Erfindung können im Träger weitere Schichten zusätzlich vorhanden oder Bestandteil der genannten Schichten sein.

Zur Verbesserung der Haftung zwischen Träger und Kleber ist das Aufbringen einer Haftvermittlerschicht vorteilhaft. Letztere besteht vorzugsweise aus Polymeren und/oder aus Komponenten von der ersten Schicht und/oder aus Kleber. Der Haftvermittler umfasst besonders bevorzugt mindestens ein Polymer, welches mindestens ein α-Olefin und ein polares Comonomer enthält. Beispiele hierfür sind lonomer, Ethylen-Vinylacetat-Copolymer, Ethylen(meth)acrylsäurecopolymer oder Maleinsäureanhydrid-modifizierte Polyolefine.

Um den Träger witterungsstabil einzustellen, ist der Zusatz von Lichtschutzmitteln zu empfehlen. Die Funktion bei der Anwendung auf der Schutzfolie besteht vorrangig in der Vermeidung der Versprödung des Trägers zur Vermeidung von Problemen beim Wiederabziehen des Oberflächenschutzklebebandes. Im Fall des zwei- oder mehrlagigen Trägers bezieht sich der Schutz insbesondere auf die erste Schicht.
Derartige Lichtschutzmittel sind bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 beschrieben. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Schutzfolie geeignet. Die Menge des Lichtschutzmittels sollte mindestens 0,15, vorzugsweise mindestens 0,30 % (w/w) bezogen auf die Folie betragen.
Vorzugsweise liegt die UV-Durchlässigkeit der Schutzfolie im Bereich von 290 bis 360 nm unter 1 %, vorzugsweise unter 0,1 %.

Eine Verwendung von Antioxidantien für die Folie (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.

Eine Verbesserung der Lichtstabilität von Trägerfolie ist auch noch durch andere Zusätze in der Schutzfolie, insbesondere in der ersten Schicht des Trägers, möglich. Dies kann durch UV-Absorber (zum Beispiel Tinuvin P, Ciba) oder vorrangig durch reflektierende Pigmente (zum Beispiel Titandioxid) erfolgen.

Es kann zweckmäßig sein, Folienadditive wie Titandioxid, Lichtschutzmittel, Alterungsschutzmittel oder Verarbeitungshilfsmittel einzeln oder zusammen vorzubatchen, vorzugsweise in Polyethylen, Polypropylen oder Polypropylenblockcopolymer.

Für den Träger sind Dicken von 20 bis 80 µm (gegebenenfalls einschließlich der Haftvermittlerschicht) bevorzugt.

Die Weichheit des Trägers spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN 53455-7-5). Dies ist auch einer der Gründe, warum alle Folien des Trägers vorzugsweise unverstreckt sein sollen.

Durch Strecken (auch Recken genannt) steigt die Kraft bei 10 % Dehnung so stark an, dass die Anschmiegsamkeit nicht mehr gegeben ist (zum Vergleich typische Werte für monoaxial verstrecktes PP-Blockcopolymer 100 N/15 mm und für biaxial verstrecktes Homopolymer 180 N/15 mm).
Weiterhin wird die Festigkeit in Querrichtung zum Verstrecken oder in der dritten Dimension (senkrecht zur Folienoberfläche) so stark reduziert, dass beim Abziehen der erfindungsgemäßen Schutzfolie die Gefahr von Abrissen oder Delamination in der dritten Dimension (auch Spleißen genannt) auftritt. Dies gilt insbesondere bei Klebern mit besonders guter Haftung wie zum Beispiel die bevorzugten Kleber aus Ethylen-Vinylacetat-Copolymer.

Die erfindungsgemäßen Schutzfolien weisen vorzugsweise einen Schrumpf in Längs- und Querrichtung von weniger als 3 %, besonders bevorzugt von weniger als 1 % auf. Die Messung des Schrumpfes erfolgt in einem Umluftofen bei 120 °C. Die Probe wird hierzu für 10 Minuten auf eine stark talkumierte Pappe gelegt.

Als Klebemassen können Elastomere wie zum Beispiel EPDM- oder EPM-Kautschuk, Polyisobutylen, Butylkautschuk, EVM (Ethylen-Vinylacetat-Copolymer), hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM verwendet werden. Da die erfindungsgemäßen Schutzfolien alterungs- und witterungsstabil sein sollen, sind instabile ungesättigte Elastomere wie Naturkautschuk, SIS, SBS, SBR oder NBR weniger geeignet. Die für die Folien genannten Lichtschutzmittel können auch bei der Klebemasse angewendet werden. Dieser Zusatz erhöht die Alterungsstabilität der Klebemasse insbesondere bei UV-Belastung über 100 kLy (Kilolangley entspricht Kcal/cm²), ist aber für Anwendungen bis zu sechs Monaten Außenbewitterung bei Klebern aus Ethylen-Vinylacetat-Copolymer entbehrlich. Bei Klebern aus Polyisobutylen-Homopolymeren oder Butylkautschuken ist ein solcher Zusatz zwingend, wenn bei sehr starker UV-Belastung Klebstoffrückstände verhindert werden sollen.

Es kann vorteilhaft sein, die Klebemasse zu vernetzen. Dadurch steigt die Wärmebeständigkeit (zum Beispiel bei Wechselklima). Das Aufziehen auf raue oder unpolare Untergründe wie Fensterdichtungen aus Synthesekautschuk wird dadurch reduziert. Die Vernetzung verbessert vor allem auch die Scherfestigkeit. Diese ist bei der Anwendung als Schutzfolie von besonderer Bedeutung, da sie dem Schrumpf der Schutzfolie in der Anwendung Widerstand leistet. Für die Vernetzung sind die üblichen Vernetzungsmittel geeignet. Bevorzugt wird das Verfahren der Strahlenvernetzung, insbesondere mit UV-und Elektronenstrahlen. Im Fall von UV-Strahlen wird die Klebemasse von der Klebemassenseite bestrahlt. Durch die Anwendung von Photoinitiatoren oder durch Zugabe von Vernetzungspromotoren wie Estern des Allylalkohols, der Methacrylsäure oder der Acrylsäure zur Klebemasse kann die Strahlungsdosis verringert werden.

Als besonders geeignet stellten sich Copolymere des Ethylens oder Vinylacetats, insbesondere Ethylen-Vinylacetat-Copolymere mit einem VAc-Anteil von mindestens 40 % (w/w) heraus. Diese garantieren eine auch in kritischen Fällen (klebstoffabweisende Lacke oder stark gekrümmte Verklebungsflächen) hohe Verklebungsfestigkeit und weisen selbst ohne Zusatz von Lichtschutzmitteln im Kleber eine hohe Witterungsstabilität auf. Bevorzugt wird ein VAc-Anteil von 55 bis 70 % (w/w). Die Kombination von unverstrecktem Polypropylen-Blockcopolymer als erste Schicht und Ethylen-Vinylacetat-Copolymer als Kleber ist auch deshalb günstig, da das eine Material einen geringen Schrumpf aufweist und das andere einen sehr hohen Widerstand (Scherfestigkeit) gegen den Schrumpf im verklebten Zustand leistet. Die Scherfestigkeit ist so gut, dass in der Regel auf eine Vernetzung verzichtet werden kann.

Zur Optimierung der Eigenschaften, insbesondere des Klebeverhaltens auf speziellen Lacken, kann die zum Einsatz kommende Selbstklebemasse (Kleber) mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln oder Vernetzungspromotoren abgemischt sein.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können sowie weitere wie aufgeführt in Ullmann's Enzyklopädie der technischen Chemie, Band 12, Seiten 525 bis 555 (4. Aufl.), Weinheim. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind dieselben, die für die Stabilisierung der Folien aufgeführt sind.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Für einige Lacksysteme ist es vorteilhaft, Bestandteile der Lacke dem Kleber hinzuzufügen, um die Migration von Lackbestandteilen (zum Beispiel Fettsäureester des Glycerins, Silicone oder sonstige Weichmacher) aus dem Lack in die Klebemasse zu verringern. Derartige Lackbestandteile sind in EP 0 763 584 A1 und US 5,612,135 A1 näher beschrieben.

Darüber hinaus ist es für die stoffliche und thermische Verwertung vorteilhaft, wenn der Kleber, insbesondere die gesamte Schutzfolie, halogenfrei ist.

Besonders vorteilhaft lässt sich die erfindungsgemäße Schutzfolie durch Coextrusion herstellen, bei der alle Schichten (Träger, Haftvermittler, Kleber) simultan coextrudiert werden. Dies stellt die technisch beste Lösung dar.

Der Träger allein kann ebenfalls durch Coextrusion der ersten und der zweiten Schicht sowie der gegebenenfalls vorhandenen weiteren Schichten hergestellt werden.
Derartige Folien können auf Blasanlagen oder vorzugsweise Cast-Anlagen (T-die technology) gefertigt werden, wobei die Folien nicht durch Recken (Verstrecken) mit Reckwalzen oder Reckrahmen mono- oder biaxial verstreckt werden. Beim Blasen von solchen Folien ist die Orientierung über Abzugsgeschwindigkeit, Aufblasverhältnis und Temperaturprofil so gering wie möglich zu halten.

Die Coextrusion ist auch ein geeignetes Mittel, um die Haftvermittlungsschicht bei der Herstellung des Trägers aufzubringen.
Der Haftvermittler kann durch Coextrusion mit dem Träger, durch Coextrusion mit Träger und Kleber oder durch Beschichtung auf dem Träger aufgebracht werden.

Eine vorteilhafte Ausführungsform besteht darin, dass der Haftvermittler bei der Extrusion des Trägers simultan aufgebracht wird, so dass die erhaltene Coextrusionsfolie nur noch mit dem Kleber beschichtet zu werden braucht.

Fast alle Versuche, Kleber, Haftvermittler und die erste Schicht/Folie (aus dem Blockcopolymer) durch Coextrusion in einem Arbeitsschritt herzustellen sind bisher gescheitert, da bei einer Breite von über 1 m keine gleichmäßige Schichtdickenverteilung erzielt werden konnte. Die Nacharbeitung von aus der Literatur bekannten Beispielen zur Herstellung von Schutzfolien allgemeiner Art durch Coextrusion zeigt, dass keine anwendungsgerechte Schichtdickenverteilung erzielt werden konnte, wenn die Breite der Anlage über 1 m beträgt. Dies gilt insbesondere bei Verwendung von Rohstoffen für stark haftende Kleber, also nicht nur leicht klebriger teilkristalliner Copolymerer wie sie üblicherweise für Siegelschichten verwendet werden.
Es war daher sehr überraschend, dass sich Ethylen-Vinylacetat-Copolymere mit mindestens 40 % (w/w) Vinylacetat mit Blockcopolymeren wie im Beispiel beschrieben coextrudieren ließen. Die Schichtdickenverteilung ist so gut, dass bei 1000 m Lauflänge und 1,5 m Breite gleichmäßig gewickelte Rollen entstanden und die Klebkraft auf Stahl (AFERA 4001) über die Breite in einem Toleranzbereich von ± 20 % liegt. Um dieses Ergebnis zu erreichen, müssen die Schmelzindices der Rohstoffe der Schichten und die Temperaturen der Schmelzeströme aufeinander abgestimmt werden.

### Am günstigsten sind folgende Bereiche:

Die Schmelzindices der Folien (auch Teilschichten wie Primer) liegen im Bereich von 0,3 bis 10 g/10 min bei 230 °C und 2,16 kg und für den Kleber im Bereich von 0,5 bis 10 g/10 min bei 190 °C und 2,16 kg. Die Dichte des verwendeten PE-LD liegt im Bereich von 0,915 bis 0,930 g/cm³. Die Temperatur der Kleberschmelze liegt unter der Folie (gemessen an der Stelle der Vereinigung der Schmelzeströme).

Der Erfindungsgegenstand ist aufgrund seiner Vorteile insbesondere zur Anwendung auf lackierten Fahrzeugen wie Automobilen geeignet. Dabei ist eine Verklebungsfestigkeit von mindestens 0,7 N/cm schon im frisch verklebten Zustand wünschenswert (Methode AFERA 4001 entsprechend DIN EN 1939), damit sich die Folie kurz nach Applikation durch die Spannungen (insbesondere bei unebener Verklebung) nicht an Verklebungskanten ablösen oder gar beim Transportieren oder Fahren des Automobils durch den Fahrtwind ganz ablösen kann. Da die Klebkraft auf Lacken von der jeweiligen Lackformulierung abhängt, kann die Klebkraft der Schutzfolie besser durch die Klebkraft auf Stahl (AFERA) charakterisiert werden. Sie soll frisch verklebt möglichst zwischen 0,2 und 3,8 N/cm, vorzugsweise zwischen 0,7 und 1,7 N/cm, liegen.

Des Weiteren ist die erfindungsgemäße Schutzfolie ist besonders zum Montage- oder Transportschutz des frischen Abschlusslacks von Automobilen oder als Bearbeitungs- und Transportschutz von frisch lackierten Stahlblechen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist. Weiterhin zeigt die Schutzfolie auch bei der Verwendung als Kantensicherungsband zur zusätzlichen Befestigung andersartiger großflächiger selbstklebender Abdeckfolien mit geringer Klebkraft hervorragende Eigenschaften.

Weiterhin zeichnet sich die erfindungsgemäße Schutzfolie dadurch aus, dass sie bei Automobilen in großer Breite über Motorhaube, Dach und Kofferraum applizierbar ist und sich aufgrund ihrer Verformbarkeit planen und sogar leicht gewölbten geformten Flächen sehr gut anpasst. Damit ist der Schutz der am stärksten durch Verschmutzung gefährdeten horizontalen Flächen möglich. Aber auch schmale Bereiche wie zum Beispiel der Türvorsprung unter den Fenstern oder Stoßfänger können leicht abgedeckt werden. Der Schutz der vertikalen Flächen am Fahrzeug bietet sich besonders während der Montage derselben an. Trotz der guten Dehnbarkeit zeigt sich nicht der Mangel des Schrumpfes von konventionellen gut verformbaren Polyethylen-Schutzfolien.

Die Schutzfolie ist beständig gegen Sonnenlicht, Feuchtigkeit, Hitze und Kälte, wobei die Witterungsstabilität von wenigstens einem Jahr gegeben ist. Insbesondere der Zusatz von Pigmenten wie Titandioxid sowie von Lichtschutzstabilisatoren führt zu einer Verbesserung der UV-Beständigkeit der Schutzfolie. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie vermeidet die Zersetzung des Klebers durch Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen.

Nach Gebrauch ist die Schutzfolie trotz der geforderten guten Haftfestigkeit rückstandsfrei und ohne Reißen der Trägerfolie abziehbar. Die stoffliche oder energetische Verwertung der Schutzfolie ist möglich, insbesondere weil selbige halogenfrei ist.

Durch das Verwenden des Polypropylen-Blockcopolymers in der ersten Schicht reißt beim Wiederabziehen die Schutzfolie selbst bei einem gut haftenden Kleber die Schutzfolie nicht.
Bei einem Test von Oberflächenschutzbändern nach UV-Bewitterung stellte sich heraus, dass bei Trägerfolie aus normalem Polypropylen (Polypropylenhomopolymer), normalem Polyethylen (HDPE) oder einer Mischung hiervon im Verhältnis 1:1 sehr schnell eine Versprödung auftritt, bei LDPE oder Polypropylen-Random-Copolymer (mit 5 % Ethylen) sind die Verhältnisse günstiger, bei Polypropylen-Blockcopolymer mit 3 bis 15 % (w/w) Ethylen werden die besten Ergebnisse erzielt. Die Vorteile der Verwendung Polypropylen-Blockcopolymer für die erste Schicht sind daher insbesondere im sehr praxisrelevanten Fall beim Abziehen nach Bewitterung herausragend. Bei der in dieser Erfindung bevorzugten Kombination von Polypropylen-Blockcopolymer für die erste Schicht und stark haftendendem Ethylen-Vinylacetet-Copolymer für den Kleber können die wichtigen Eigenschaften hoher Haftung aber auch guter Wiederablösbarkeit der Schutzfolie in eindrucksvoller Weise widerspruchslos erzielt werden.

Als weiterer Vorteil stellte sich die Beständigkeit der erfindungsgemäßen Schutzfolie gegen Schrumpf in der Wärme heraus. Dies ist wichtig, damit sich an den Kanten der mit der Schutzfolie abgedeckten Oberfläche keine Schmierspuren des Klebers bilden. Weiterhin ist dies günstig für den Durchgang der Schutzfolie durch einen Ofen zwecks Trocknung des Klebers. Schutzfolien aus Polyethylen als wesentlichem Bestandteil haben unzureichende Wärmebeständigkeit, auch wenn die Anschmiegsamkeit (Dehnbarkeit) für die Automobilanwendung besonders günstig ist.

Die Verwendung von Polyethylen oder Polypropylen-Random-Copolymeren als Hauptbestandteil der Folie von Oberflächenschutzbändern ist üblich, weil die Anschmiegsamkeit (siehe oben unter Weichheit/Verformbarkeit) günstig ist. Auch die Zähigkeit ist besser als beim wärmebeständigen aber dafür wenig spröden Polypropylen(homopolymer). Dies gilt auch für Schutzfolien zur Abdeckung von Automobilen. Derartige Schutzfolien haben allerdings den Nachteil, dass die Wärmebeständigkeit nur mäßig ist.

Die Verwendung von Polypropylen-Block-Copolymeren als Hauptbestandteil in der ersten Folie löst in einmaliger Weise den Konflikt zwischen ausreichender Weichheit einerseits und Wärmebeständigkeit andererseits. Dies gilt ebenso für die widersprüchliche Forderung nach hoher Zähigkeit bei gleichzeitiger Wärmebeständigkeit.

Stark klebendes Ethylen-Vinylacetat-Copolymer als Kleber führt nach Lagerung der Rollen der Schutzfolie zu relativ schwerem Abrollen, wenn kein Trennmittel als wesentlicher Folienbestandteil verwendet wird. Ein schweres Abrollen führt nicht nur zur Überanstrengung der verwendenden Personen, sondern auch zur irreversiblen Verdehnung der Schutzfolie an den Stellen, an denen die Person (oder eine Greifeinrichtung) anfasst, um die Rolle abzuwickeln.
Für den Fachmann überraschend und nicht vorhersehbar zeigt eine Schutzfolie mit einer zweiten, außenliegenden Schicht aus PE-LD und einer Klebkraft der auf der ersten Schicht befindlichen Ethylenvinylacetat-Klebemasse auf Stahl zwischen 0,2 und 3,8 N/cm, insbesondere bei Verwendung von Ethylenvinylacetat-Copolymer mit mindestens 40 % (w/w) Vinylacetat, die angestrebte Eigenschaftskombination:
- niedrige Abrollkräfte auch und vor allem nach Lagerung
- gute Verankerung der reinen PE-LD Schicht auf der ersten Schicht

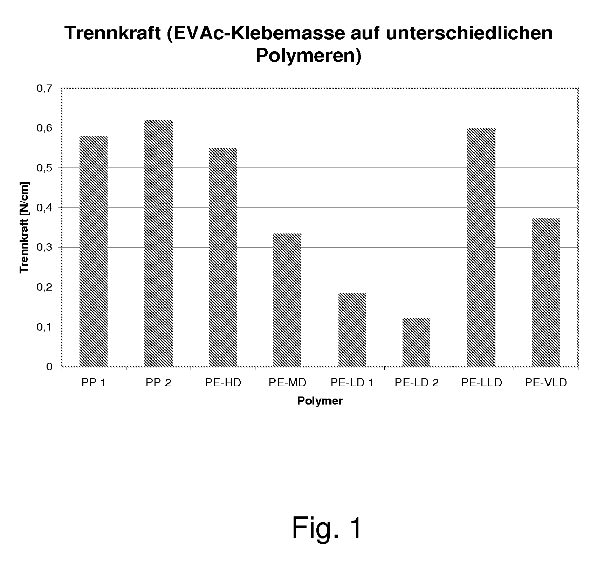

Im Unterschied zu vielen anderen Polyethylenen (zum Beispiel PE-HD, PE-MD, PE-LLD) und Polypropylen sind die Klebkräfte einer Klebmasse basierend auf Ethlyenvinylacetat-Copolymer auf einer Schicht aus PE-LD deutlich geringer und bleiben dies auch bei Lagerung (vergleiche Figur 1). Eine zusätzliche Beschichtung mit einem Trennmittel-Lack, wie er für viele Klebebänder durchgeführt werden muss, ist in diesem Fall bei Vorliegen einer Außenschicht aus PE-LD nicht nötig. Trotz der dem Fachmann bekannten Unverträglichkeit von Polypropylen und Polyethylen ist die Verankerung der PE-LD Schicht auf der Schicht mit Polypropylen-Blockcopolymer-Anteil für die Anwendung ausreichend hoch.

Die bevorzugt verwendeten EVAc-Selbstklebemassen weisen auf der einen Seite eine gute Haftfestigkeit auf verschiedenen in der Automobilindustrie gebräuchlichen Lacken auf, auch unter Feuchte- oder Feuchtklimaeinfluss, so dass sich die Schutzfolie auch unter Windeinwirkung oder unter Spannung durch Verklebung auf gewölbten Flächen nicht vom Fahrzeug ablöst. Darüber hinaus zeigt diese Selbstklebemasse eine hinreichende Verklebungsfestigkeit innerhalb der ersten Minuten nach Applikation, so dass die Schutzfolie bereits nach einer halben Stunde zum Beispiel einer starken Fahrtwindbelastung (bis zu 160 km/h) ausgesetzt werden kann, andererseits nach längerem Gebrauch ohne Abrisse entfernbar ist.

Die Abzugskraft (Klebkraft) der erfindungsgemäßen Schutzfolie mit EVAc-Selbstklebemassen von 2 K-PU-Lacken liegt in der Regel frisch über 0,7 und nach Wechselklimalagerung unter 4 N/cm (analog Methode AFERA 4001). Auch die Bestrahlung der Schutzfolie mit UV-Licht, beispielsweise mit Xenotest 1200 bei 55 °C über 3000 Stunden, führt zu keinen Mängeln in den Eigenschaften der Schutzfolie. Es treten keine Versprödung der Folie und keine Masserückstände beim Abziehen auf.

### Prüfmethoden

Die Messungen werden, wenn nicht anders angegeben, bei einem Prüfklima von 23 ± 1 °C und 50 ± 5 % rel. Luftfeuchte durchgeführt.

Das Zugdehnungsverhalten der Schutzfolie wird an 15 mm breiten und 150 cm langen Prüfstreifen, Einspannlänge 100 mm nach DIN EN ISO 527-3/2/300 mit einer Prüfgeschwindigkeit von 300 mm/min ermittelt.

Die Sofortklebkräfte werden bei einem Abzugswinkel von 180° in Anlehnung an AFERA 4001 an 20 mm breiten Teststreifen bestimmt. Hierbei werden PVC-Platten nach AFERA-Norm als Prüfuntergrund verwendet, auf die ein Streifen des zu prüfenden Klebebands aufgebracht wird. Ein zweiter Streifen wird auf die Rückseite des ersten Streifens aufgebracht und dessen Klebkraft auf der Rückseite des ersten gemäß AFERA 4001 geprüft.

Die Trennkraft wird an einer Verklebung von zwei jeweils 20 mm breiten Teststreifen bestimmt. Die offene Klebemassenseite der Verklebung wird dabei mit einem ebenfalls 20 mm breiten und 30 µm dicken Streifen aus PVC abgedeckt. Die Probe wird vor der Messung für 7 Tage bei 40 °C unter einer Gewichtsbelastung der Verklebung von 2 N/cm² gelagert. Nach der Lagerung werden die Teststreifen auf eine Länge von 220 mm zugeschnitten und für zwei Stunden bei Prüfklima gelagert. Für die Messung wird der obere Teststreifen der Verklebung in die obere Klemmbacke einer Zugprüfmaschine wie sie in AFERA 4001 verwendet wird, eingespannt. Der untere Teststreifen sowie der PVC-Streifen werden in der unteren Klemmbacke eingespannt. Der Klemmbackenabstand beträgt dabei 50 mm. Die Messung erfolgt mit einer Geschwindigkeit von 300 mm/min, mit der die Klemmbacken auseinander gefahren werden. Die über eine Strecke von 100 mm ermittelte Mittelwert der für die Trennung der Verklebung benötigten Kraft entspricht der Trennkraft.

Die Dicke wird nach DIN 53370 bestimmt, wobei der Taster plan (nicht gewölbt) ist. Bei strukturierten Folien wird jedoch die Dicke vor dem Prägen zugrunde gelegt. Dies ist auch nachträglich über das Flächengewicht (ermittelt nach DIN 53352) und Umrechnung mit der Dichte möglich. Die Prägetiefe ist die Differenz zwischen den Dicken mit und ohne Prägung.

Folgende Beispiele sollen die Erfindung erläutern, ohne deren Umfang zu beschränken:

### Beispiele

### Vergleichsbeispiel 1

Eine Folie wurde durch Flachfolienextrusion in 1450 mm Breite gefertigt. Sie bestand aus einer 50 µm dicken ersten Schicht und einer 10 µm dicken Haftvermittlerschicht auf der freien Seite der ersten Schicht.
Die erste Schicht bestand aus
- 91,3 % (w/w): aus Blockcopolymer Novolen 2309 L (BASF, Schmelzindex 6 g/10 min bei 230 °C und 2,16 kg, Ethylengehalt ca. 6,5 % (w/w)),
- 8,4 % (w/w): Titandioxid und
- 0,3 % (w/w): des HALS-Stabilisators Tinuvin 770.
Die Haftvermittlerschicht bestand aus 50 % (w/w) aus Novolen 2309 L und 50 % (w/w) eines EVAc-Copolymers Escorene Ultra UL 00728 (Exxon). Vor der Extrusion wurden die Rohstoffe mit einem Betonmischer vorgemischt.
Als Kleber wurde eine 10 %ige Lösung folgender Rohstoffe in Toluol hergestellt:
- 65 % (w/w) eines Copolymers aus 70 % (w/w) Vinylacetat und 30 % (w/w) Ethylen mit einer Mooney-Viskosität ML (1+4) bei 100 °C (DIN 53523) ohne Vorbehandlung von 28
- 30 % (w/w) eines Copolymers aus 45 % (w/w) Vinylacetat und 55 % (w/w) Ethylen mit einer Mooney-Viskosität ML (1+4) bei 100 °C (DIN 53523) ohne Vorbehandlung von 18
- 4,8 % (w/w) eines hydrierten Kolophoniumglycerinesters.
- 0,2 % (w/w) Irganox 1010 (Antioxidans).

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 12 µm.

Die so hergestellte Selbstklebefolie ließ sich leicht und faltenfrei abwickeln und beim Gebrauch zum Schutz von Automobilen einwandfrei applizieren.

### Vergleichsbeispiel 2

Eine Folie wurde durch Flachfolienextrusion in 1450 mm Breite gefertigt. Sie bestand aus einer 50 µm dicken ersten Schicht, einer 10 µm dicken Außenschicht und einer 10 µm dicken Haftvermittlerschicht auf der freien Seite der ersten Schicht.
Die Zusammensetzung der ersten Schicht war die gleiche wie in Vergleichsbeispiel 1.
Die Außenschicht bestand aus 100 % Lupolen 3721 C (Basell, PE-MD, d = 0,937 g/cm³). Haftvermittlerschicht und Kleber entsprachen denen in Vergleichsbeispiel 1.

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 12 µm.

Die so hergestellte Selbstklebefolie ließ sich leicht und faltenfrei abwickeln und beim Gebrauch zum Schutz von Automobilen einwandfrei applizieren.

### Vergleichsbeispiel 3

Eine Folie wurde durch Flachfolienextrusion in 1450 mm Breite gefertigt. Sie bestand aus einer 50 µm dicken ersten Schicht, einer 10 µm dicken Außenschicht und einer 10 µm dicken Haftvermittlerschicht auf der freien Seite der ersten Schicht.
Die Zusammensetzung der ersten Schicht war die gleiche wie in Vergleichsbeispiel 1.
Die Außenschicht bestand aus 100 % Polyethylen LL 1030XV (ExxonMobil Chemical, PE-LLD, d = 0,918 g/cm³).
Haftvermittlerschicht und Kleber entsprachen denen in Vergleichsbeispiel 1.

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 20 µm.

Die so hergestellte Selbstklebefolie ließ sich leicht und faltenfrei abwickeln und beim Gebrauch zum Schutz von Automobilen einwandfrei applizieren.

### Vergleichsbeispiel 4

Eine Folie wurde durch Flachfolienextrusion in 1450 mm Breite gefertigt. Sie bestand aus einer 50 µm dicken ersten Schicht, einer 10 µm dicken zweiten Schicht (Außenschicht) und einer 10 µm dicken Haftvermittlerschicht auf der freien Seite der ersten Schicht.
Die Zusammensetzung der ersten Schicht war die gleiche wie in Vergleichsbeispiel 1.
Die Außenschicht bestand aus PE-LD und PP-Copolymer (70 % (w/w) ExxonMobil Chemical LD252, Dichte = 0,923 g/cm³, 30 % (w/w) Blockcopolymer Daplen FFC 2012).
Haftvermittlerschicht und Kleber entsprachen denen in Vergleichsbeispiel 1.

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 12 µm.

Die so hergestellte Selbstklebefolie ließ sich leicht und faltenfrei abwickeln und beim Gebrauch zum Schutz von Automobilen einwandfrei applizieren.

### Beispiel 1

Eine Folie wurde durch Flachfolienextrusion in 1450 mm Breite gefertigt. Sie bestand aus einer 50 µm dicken ersten Schicht, einer 10 µm dicken Außenschicht und einer 10 µm dicken Haftvermittlerschicht auf der freien Seite der ersten Schicht.
Die Zusammensetzung der ersten Schicht war die gleiche wie in Vergleichsbeispiel 1.
Die Außenschicht bestand aus 100 % Polyethylen LD252 (ExxonMobil Chemical, PE-LD, d = 0,923 g/cm³).
Haftvermittlerschicht und Kleber entsprachen denen in Vergleichsbeispiel 1.

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 12 µm.

Die so hergestellte Selbstklebefolie ließ sich leicht und faltenfrei abwickeln und beim Gebrauch zum Schutz von Automobilen einwandfrei applizieren.

### Beispiel 2

Die Schutzfolie wurde durch Coextrusion von vier Schichten einschließlich Kleber hergestellt.

Rohstoffe:
- Erste Schicht 50 µm:
   - 60 % (w/w): Blockcopolymer Daplen FFC 2012 (PCD, Schmelzindex 5 g/10 min bei 230 °C und 2,16 kg, Ethylengehalt ca. 12 % (w/w)),
   - 25 % (w/w): Homopolymer Daplen KF 201 (PCD, Schmelzindex 8 g/10 min bei 230 °C und 2,16 kg),
   - 6,3 % (w/w): Lupolen 1840 H (LDPE, Elenac GmbH, Schmelzindex 1,5 g/10 min bei 190 °C und 2,16 kg, Dichte 0,919 g/cm³),
   - 8,4 % (w/w): Titandioxid und
   - 0,3 % (w/w): Tinuvin 770.
- Zweite Schicht 10 µm:
   - 100 %: Polyethylen LD165BW1 (ExxonMobil Chemical PE-LD,
   d = 0,922 g/cm³).
- Haftvermittlerschicht 10 µm:
   wie Vergleichsbeispiel 1
- Kleberschicht 12 µm:
   Copolymer aus 59,5 % (w/w) Vinylacetat und 39,5 % (w/w) Ethylen mit einem Schmelzindex von 3 g/10 min bei 190 °C und 2,16 kg. Vor der Extrusion wurde der Kleberrohstoff zu ca. 5 mm großen Granulatteilchen unter Zusatz von ca. 1 % (w/w) Kieselsäure als Puderungsmittel verarbeitet.

Die so hergestellte Rolle Schutzfolie lag in 1,5 m Breite und 1000 m Länge vor, die Wickelqualität war einwandfrei. Die Rolle ließ sich leicht und faltenfrei abwickeln und beim Gebrauch zum Schutz von Automobilen einwandfrei applizieren. Nach Gebrauch konnte diese Selbstklebefolie bis zu einem Jahr Verklebungsdauer unter Außenwitterung ohne Mängel wieder abgezogen werden.

### Beispiel 3

Eine Folie wurde durch Flachfolienextrusion in 1450 mm Breite gefertigt. Sie bestand aus einer 50 µm dicken ersten Schicht, einer 10 µm dicken Außenschicht und einer 10 µm dicken Haftvermittlerschicht auf der freien Seite der ersten Schicht.
Die Zusammensetzung der ersten Schicht war die gleiche wie in Vergleichsbeispiel 1.
Die Außenschicht bestand aus PE-LD und PP-Copolymer (85 % (w/w) ExxonMobil Chemical LD252, Dichte = 0,923 g/cm³, 15 % (w/w) Blockcopolymer Daplen FFC 2012).
Haftvermittlerschicht und Kleber entsprachen denen in Vergleichsbeispiel 1.

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 12 µm.

Die so hergestellte Selbstklebefolie ließ sich leicht und faltenfrei abwickeln und beim Gebrauch zum Schutz von Automobilen einwandfrei applizieren.

### Vergleich der Eigenschaften

| | Sofortklebkraft [N/cm] | Trennkraft [N/cm] |
|---|---|---|
| Vergleichsbeispiel 1 | 0,22 | 0,55 |
| Vergleichsbeispiel 2 | 0,11 | 0,33 |
| Vergleichsbeispiel 3 | 0,17 | 0,60 |
| Vergleichsbeispiel 4 | nicht gemessen | 0,54 |
| Beispiel 1 | 0,06 | 0,18 |
| Beispiel 2 | 0,13 | 0,12 |
| Beispiel 3 | nicht gemessen | 0,33 |

Ein Vergleich der Klebkräfte aus den Beispielen 1 und 2 mit denen der Vergleichsbeispiele macht deutlich, dass die Klebkräfte der Ethylenvinylacetat-Klebemasse auf den Folien mit PE-LD-Außenschicht vor allem im Fall der Trennkraft weit unter denen der übrigen Außenschichten liegen. Während die Sofortklebkräfte der Beispiele oft noch in der Größenordnung der Vergleichsbeispiele liegen, erreichen die Trennkräfte nach längerer Lagerung bei erhöhter Temperatur bei Verwendung einer PE-LD-Außenschicht in keinem Fall das Niveau der Vergleichsbeispiele. Diese Unterschiede zwischen Sofortklebkraft und Trennkraft sind in einer Änderung der Verklebungsfestigkeit der Ethylenvinylacetat-Klebemasse auf verschiedenen Untergründen bei Lagerung des Klebeverbundes begründet. Während es bei Lagerung meist zu einer Erhöhung der Verklebungsfestigkeit kommt, gilt dies nicht oder nur in geringem Maß für die Verklebung auf PE-LD. Damit ist dieser Untergrund besonders zur Erreichung einer niedrigen Abrollkraft auch nach Lagerung geeignet. Aus Beispiel 3 und Vergleichsbeispiel 4 geht hervor, dass eine Abmischung eines PE-LD mit PP-Copolymer für einen PE-LD-Anteil von 85 % noch niedrige Trennkräfte ergibt, ein PE-LD-Anteil von nur 70 % aber keinen ausreichenden Effekt mehr zeigt.

## Patentansprüche

1. Selbstklebende Schutzfolie, bestehend aus einem Träger, auf den einseitig eine Klebemasse aufgebracht ist,
**dadurch gekennzeichnet, dass**
der Träger zumindest zwei Schichten aufweist, eine erste, der Klebemasse zugewandte Schicht aus einer ungereckten Folie, die mindestens ein Propylen-Blockcopolymer mit einem Gehalt von 10 bis 95 % (w/w) enthält, und eine zweite, der Klebemasse abgewandte Schicht aus einer Folie, die mindestens 75 % (w/w), bevorzugt mindestens 80 % (w/w) eines Polyethylens niedriger Dichte enthält.

2. Selbstklebende Schutzfolie nach Anspruch 1,
**dadurch gekennzeichnet, dass**
das Polyethylen niedriger Dichte eine Dichte zwischen 0,915 g/cm³ und 0,935 g/cm³, bevorzugt zwischen 0,915 g/cm³ und 0,930 g/cm³ besitzt.

3. Selbstklebende Schutzfolie nach Anspruch 1 oder 2,
**dadurch gekennzeichnet, dass**
die zweite Schicht eine Dicke von höchstens 15 µm, bevorzugt höchstens 10 µm hat.

4. Selbstklebende Schutzfolie nach zumindest einem der Ansprüche 1 bis 3,
**dadurch gekennzeichnet, dass**
der Schmelzindex des Polypropylen-Blockcopolymeren zwischen 0,8 und 15 g/10 min bei 230 °C und 2,16 kg beträgt.

5. Selbstklebende Schutzfolie nach zumindest einem der vorhergehenden Ansprüche,
**dadurch gekennzeichnet, dass**
der Ethylengehalt des Polypropylen-Blockcopolymeren zwischen 3 und 15 % (w/w) liegt.

6. Selbstklebende Schutzfolie nach zumindest einem der vorhergehenden Ansprüche,
**dadurch gekennzeichnet, dass**
der Anteil an Propylen-Blockcopolymer in der ersten Schicht mindestens 65 % (w/w) beträgt.

7. Selbstklebende Schutzfolie nach zumindest einem der vorhergehenden Ansprüche,
**dadurch gekennzeichnet, dass**
sich zwischen der Trägerschicht und der Klebemasse ein Haftvermittler befindet.

8. Selbstklebende Schutzfolie nach zumindest einem der vorhergehenden Ansprüche,
**dadurch gekennzeichnet, dass**
der Haftvermittler mindestens ein Polymer umfasst, welches mindestens ein α-Olefin und ein polares Comonomer enthält.

9. Selbstklebende Schutzfolie nach zumindest einem der vorhergehenden Ansprüche,
**dadurch gekennzeichnet, dass**
die Kleberschicht aus mindestens einem Copolymeren aus Ethylen und Vinylacetat besteht, wobei der Gehalt an Vinylacetat in der Kleberschicht vorzugsweise mindestens 40 % (w/w) beträgt, besonders bevorzugt 55 bis 70 % (w/w).

10. Selbstklebende Schutzfolie nach zumindest einem der vorhergehenden Ansprüche,
**dadurch gekennzeichnet, dass**
die Klebkraft auf Stahl zwischen 0,2 und 3,8 N/cm liegt, insbesondere zwischen 0,7 und 1,7 N/cm.

11. Selbstklebende Schutzfolie nach zumindest einem der vorhergehenden Ansprüche,
**dadurch gekennzeichnet, dass**
die Dicke des Trägers zwischen 20 und 80 µm beträgt, bevorzugt einschließlich der Haftvermittlerschicht.

12. Selbstklebende Schutzfolie nach zumindest einem der vorhergehenden Ansprüche,
**dadurch gekennzeichnet, dass**
der Träger, insbesondere die erste Schicht mindestens ein Lichtschutzmittel in einer Menge von mindestens 0,15 % (w/w) enthält.

13. Selbstklebende Schutzfolie nach einem der vorhergehenden Ansprüche, **dadurch gekennzeichnet, dass** die Trägerschicht durch Coextrusion von mindestens zwei Schichten, nämlich einer zur Klebmasse gewendeten Schicht und einer Außenschicht, hergestellt wird und die Außenschicht das Polyethylens niedriger Dichte umfasst.

14. Selbstklebende Schutzfolie gemäß einem der vorhergehenden Ansprüche, **dadurch gekennzeichnet, dass** die Trägerschicht zusammen mit der Haftvermittlerschicht coextrudiert wird.

15. Verfahren zur Herstellung einer selbstklebenden Schutzfolie gemäß zumindest einem der vorhergehenden Ansprüche,
**dadurch gekennzeichnet, dass**
die Schichten des Trägers, gegebenenfalls die Haftvermittlerschicht und die Klebemasse simultan coextrudiert werden.

16. Verfahren zur Herstellung einer selbstklebenden Schutzfolie gemäß zumindest einem der vorhergehenden Ansprüche,
**dadurch gekennzeichnet, dass**
die Schichten des Trägers und gegebenenfalls die Haftvermittlerschicht simultan coextrudiert werden, wobei auf die Haftvermittlerschicht anschließend eine Klebemasse aufgebracht wird.

17. Verwendung einer Schutzfolie gemäß zumindest einem der vorhergehenden Ansprüche auf lackierten Flächen von Fahrzeugen oder Fahrzeugteilen, wobei die Applikation der Schutzfolie bevorzugt vor der Fahrzeugmontage erfolgt, oder zum Montage- oder Transportschutz des frischen Abschlusslacks von Automobilen oder als Bearbeitungs- und Transportschutz von frisch lackierten Stahlblechen.
